# EUROPÄISCHE PATENTANMELDUNG

(11) **EP 0 916 708 A1**
(43) Veröffentlichungstag der Anmeldung: **19.05.1999**
(21) Anmeldenummer: 98121439.8
(22) Anmeldetag: 11.11.1998
(51) Int. Cl.: C09D 5/36

(54) **Flüssigeffektlack und Verfahren zur Herstellung eines Flüssigeffektlacks**

(30) Priorität: 14.11.1997 DE 19750519
(71) Anmelder: KARL WÖRWAG LACK- UND FARBENFABRIK GMBH & CO. KG, 70435 Stuttgart (DE)
(72) Erfinder: Fritz, Hans-Georg, 73760 Ostfildern (DE); Kost, Herbert, 71116 Gärtringen (DE); Beutinger, Andreas, 71282 Hemmingen (DE)
(74) Vertreter: Patentanwälte Ruff, Beier, Schöndorf und Mütschele

(57) **Zusammenfassung**

Ein Flüssigeffektlack mit Effektpigment, Bindemittel, Lösungsmittel und ggf. weiteren Zusatzstoffen ist erfindungsgemäß unter Verwendung einer homogenisierten und/oder dispergierten Mischung aus Bindemittel und Effektpigment hergestellt. Bei der Mischung handelt es sich insbesondere um ein Extrudat aus Bindemittel und Effektpigment. Bei dem Effektpigment kann es sich um ein Metalleffektpigment oder um ein Perlglanzpigment handeln. Durch die Verwendung der Mischung, insbesondere des Extrudats bei der Herstellung des Flüssigeffektlacks, lassen sich die optischen Eigenschaften eines Pulvereffektlacks, der das entsprechende Effektpigment ebenfalls enthält, nachstellen. Weiter ist ein Verfahren zur Herstellung eines Flüssigeffektlacks umfaßt, bei dem Effektpigment und Bindemittel in einer Homogenisier-/Dispergiervorrichtung, insbesondere einem aus der Pulverlackherstellung bekannten Extruder, innig vermengt und mit Hilfe der so erhaltenen Mischung der Flüssigeffektlack hergestellt wird.

## Beschreibung

Die Erfindung betrifft insbesondere einen Flüssigeffektlack gemäß Oberbegriff von Anspruch 1 und ein Verfahren zur Herstellung eines Flüssigeffektlacks gemäß Oberbegriff von Anspruch 10.

Bekanntlich finden Pulverlacke, d.h. lösungsmittelfreie Lackzusammensetzungen eine immer größere Verbreitung. Dies ist unter anderem auf die Wirtschaftlichkeit und Umweltfreundlichkeit der Oberflächenbeschichtung mit Pulverlacken zurückzuführen. Dementsprechend finden Pulverlacke in einer Vielzahl von Branchen für die Innen- und Außenbeschichtung Verwendung, beispielsweise in der Möbel-, Hausgeräte- und Kraftfahrzeugindustrie.

Es ist auch bekannt, Pulverlacken sog. Glanzpigmente heizumischen, um auf diese Weise besondere optische Effekte, (insbesondere den sog. Flop) zu erzielen, die durch Reflexion und/oder Interferenz an den entsprechenden Pigmenten hervorgerufen werden. Derartige Lacke nennt man Pulvereffektlacke. Der genannte "Flop" läßt sich dabei beschreiben als der unterschiedliche optische (Farb-)Eindruck, der bei Betrachtung oder spektrophotometrischer Bestimmung unter verschiedenen Beobachtungswinkeln vorhanden ist.

Fehler oder Beschädigungen einer Pulverlackbeschichtung können nach deren Herstellung praktisch nicht in einem Pulverbeschichtungsschritt korrigiert, sondern müssen mit Hilfe eines entsprechenden Flüssiglacks ausgebessert werden. Dabei ist es grundsätzlich schwierig, den Farbton des Flüssiglacks genau auf den Farbton des Pulverlacks einzustellen. Bei Pulvereffektlacken stellt sich dieses Problem in besonderem Ausmaß, da die beim Pulvereffektlack zusätzlich vorhandenen optischen Effekte nachgestellt werden müssen. So ist es derzeit in vielen Fällen nicht möglich, einen Flüssigeffektlack zur Verfügung zu stellen, der insbesondere den Flop eines Pulvereffektlacks in befriedigender Weise nachbildet.

Die Erfindung stellt sich die Aufgabe, die geschilderten Nachteile des Standes der Technik zu vermeiden. Es soll ein neuer Flüssigeffektlack zur Verfügung gestellt werden, insbesondere ein solcher, der die optischen Effekte eines Pulvereffektlacks in befriedigender Weise zuverlässig nachbildet. Weiter soll ein Verfahren zur Herstellung von Flüssigeffektlacken zur Verfügung gestellt werden.

Diese Aufgabe wird gelöst durch den Flüssigeffektlack mit den Merkmalen des Anspruchs 1 und mit den Merkmalen des Anspruchs 7. Besondere Ausführungsformen sind in den abhängigen Ansprüchen 2 bis 8 beschrieben. Das erfindungsgemäße Verfahren wird durch die Merkmale des Anspruchs 9 definiert. Besondere Ausgestaltungen dieses Verfahrens ergeben sich aus den abhängigen Ansprüchen 10 bis 14. Der Wortlaut sämtlicher Ansprüche wird hiermit durch Bezugnahme zum Inhalt dieser Beschreibung gemacht.

Der bereitgestellte Flüssigeffektlack umfaßt mindestens ein Glanz- oder Effektpigment (im folgenden zusammenfassend als Effektpigment bezeichnet), mindestens ein Bindemittel, mindestens ein (flüssiges) Lösungsmittel und ggf. weitere Inhaltsstoffe, die für Flüssiglacke üblich sind. Als derartige Inhaltsstoffe sind insbesondere Farbpigmente, Füllstoffe und Additive zu nennen. Dieser Flüssigeffektlack ist erfindungsgemäß dadurch gekennzeichnet, daß er unter Verwendung einer homogenisierten und/oder dispergierten Mischung, die mindestens einen Teil des Bindemittels und mindestens einen Teil des Effektpigments enthält, hergestellt ist. Bei der Mischung handelt es sich vorzugsweise um ein sog. Extrudat, d.h. eine Masse, die durch Einsatz eines sog. Extruders erhalten wird. Der erfindungsgemäße Flüssigeffektlack enthält also im Unterschied zum Stand der Technik Effektpigmente, die in einem Homogenisier-/Dispersionsschritt, insbesondere einem Extrudierschritt, bearbeitet sind, wie er vorzugsweise aus der Pulverlackherstellung bekannt ist. Bei dem Extrudat handelt es sich insbesondere um einen üblichen Extruder, wie er bei der Herstellung von Pulverlacken Verwendung findet. Üblicherweise werden hier Schneckenextruder eingesetzt.

Durch die Verwendung der homogenisierten/dispergierten Mischung, insbesondere des Extrudats, wird das Effektpigment in besonderer Weise bearbeitet, insbesondere wird der entsprechende Verarbeitungsschritt bei der Herstellung von Pulverlacken nachgeahmt. Wenn bei der Herstellung der Mischung bzw. des Extrudats vergleichbare Bedingungen wie bei der Pulverlackherstellung eingehalten werden, so kann auf diese Weise der Flüssigeffektlack dem entsprechenden Pulvereffektlack ohne weiteres nachgestellt werden. Der Farbeindruck/Glanz des Flüssigeffektlacks bzw. sein Flop wird dann weitgehend, zumindest jedoch in hinreichendem Maße dem des Pulvereffektlacks entsprechen. Gegebenenfalls kann die Herstellung der Mischung/des Extrudats vom Fachmann in einfacher, ihm bekannter Weise variiert und durch Routineversuche eingestellt werden.

Die homogenisierte/dispergierte Mischung, insbesondere das Extrudat, enthält erfindungsgemäß mindestens einen Teil des Bindemittels und mindestens einen Teil des Effektpigments. Vorzugsweise ist nur ein Teil des (insgesamt im Flüssigeffektlack enthaltenen) Bindemittels, jedoch die Gesamtmenge an insgesamt im Flüssigeffektlack vorhandenem Effektpigment in der Mischung/dem Extrudat enthalten. Weiter enthält die Mischung/das Extrudat vorzugsweise nur Bindemittel und Effektpigment, so daß keine weiteren Bestandteile des fertigen Flüssigeffektlacks oder keine anderen, beispielsweise aus der Pulverlackherstellung bekannten, Zusätze (Härter, Additive und andere) vorhanden sind.

Als Effektpigmente werden üblicherweise Pigmente bezeichnet, deren optische Wirkung auf Reflexion und/oder Interferenz beruht. Reflexion tritt dabei normalerweise an flächig ausgebildeten und ausgerichteten Metallpigmenten (Metalleffektpigmenten) oder lichtbrechenden transparenten Pigmentteilchen (Perlglanzpigmente) auf. Bestimmte Perlglanzpigmente wirken gleichzeitig auch als Interferenzpigmente.

Metalleffektpigmente bestehen üblicherweise aus blättchenoder schuppenförmigen Metallteilchen (sog. flakes), wobei insbesondere Aluminiumpigmente verwendet werden. Es werden neben anderen auch Gold- oder Edelstahlteilchen eingesetzt.

Perlglanzpigmente sind üblicherweise aus farblosen, transparenten und lichtbrechenden Blättchen gebildet. Als Materialien werden hier Bleiverbindungen, insbesondere basisches Bleicarbonat, Wismutoxidchlorid oder auf Glimmer niedergeschlagenes Titandioxid verwendet.

Der Begriff Effektpigment soll bei der Erfindung nicht auf die genannten Metalleffektpigmente oder Perlglanzpigmente beschränkt sein. Entscheidend ist, ob ein entsprechender optischer Effekt hervorgerufen wird. So kann beispielsweise auch die Verwendung von mit Metalloxiden beschichtetem Aluminium oder von Glasperlen vorgesehen sein.

Bei den Bindemitteln sind erfindungsgemäß solche bevorzugt, die für die Herstellung der Mischung, insbesondere des Extrudats, besonders geeignet sind. Insbesondere handelt es sich also um extrudierbare Harze oder Kunstharze, die bei den Extrudierbedingungen eine ausreichende Stabilität bzw. Festigkeit besitzen. Hier sind insbesondere diejenigen Kunstharze zu nennen, die bei der Herstellung üblicher Pulverlacke bevorzugt sind. Dabei handelt es sich um Epoxidharze, Polyesterharze oder im vorliegenden Fall vorzugsweise um Acrylatharze. Derartige, für die Pulverlackherstellung verwendete Harze sind dem Fachmann bekannt.

Als Lösungsmittel sind übliche, aus dem Stand der Technik für Flüssiglacke bekannte organische Lösungsmittel verwendbar, wie beispielsweise aliphatische und aromatische Kohlenwasserstoffe, Ester, Ether, Alkohole und andere. Auch Flüssigeffektlacke auf Wasserbasis sind von der Erfindung umfaßt.

Als Farbpigmente können alle üblichen für Flüssiglacke bekannten Substanzen, also anorganische und organische Pigmente enthalten sein. Vorzugsweise werden sog. Tönpasten, insbesondere auf Basis von Celluloseacetobutyrat eingesetzt. Weiter vorgesehen sein können übliche Füllstoffe oder übliche Additive, beispielsweise zur Verbesserung des Verlaufes, der Entlüftung und andere Additive, wie sie aus dem Stand der Technik bekannt sind.

Der erfindungsgemäße Flüssigeffektlack liegt vorzugsweise in Form eines sog. Reparaturlacks vor, der zur Ausbesserung eines Pulvereffektlacks vorgesehen ist. Wie einleitend bereits angedeutet, können dadurch nachträglich Fehler, Beschädigungen und dergleichen im Pulvereffektlack durch Aufbringen eines in seiner Wirkung bezüglich Farbe/Glanz/ Flop gleichwertigen Flüssigeffektlacks ausgeglichen werden. Derartige Reparaturlacke können grundsätzlich bei allen mit Pulvereffektlacken beschichteten Gegenständen wie Möbeln, Hausgeräten, Geräten der Medizintechnik, insbesondere jedoch in der Kraftfahrzeugindustrie und dort vorzugsweise zur Ausbesserung pulverbeschichteter Metall- und Kunststoffteile wie Karosserieteilen, Verwendung finden.

Ein Flüssigeffektlack gemäß Oberbegriff des Anspruchs 1 ist erfindungsgemäß weiter dadurch gekennzeichnet, daß die vorhandenen Effektpigmentpartikel derart ausgebildet sind, daß der Flüssigeffektlack eine gleiche oder doch weitgehend gleiche optische Wirkung aufweist wie ein Pulvereffektlack, der diese Effektpigmentpartikel ebenfalls enthält. Insbesondere besitzen die Effektpigmentpartikel des Flüssigeffektlacks weitgehend die gleichen Abmessungen und/oder weitgehend die gleiche Gestalt wie die im Pulvereffektlack enthaltenen Effektpigmentpartikel.

Die bei dem Flüssigeffektlack nach der Erfindung erhaltenen Vorteile können damit erklärt werden, daß bezüglich der vorhandenen Effektpigmente/Effektpigmentpartikel der Extrudierschritt bzw. ein entsprechender Homogenisierungs-/Dispergierschritt bei der Herstellung des Pulvereffektlacks auch bei der Herstellung des Flüssigeffektlacks nachgebildet wird. Die Effektpigmente werden durch den Extrudierschritt in charakteristischer Weise bearbeitet, d.h. vorhandene Blättchen oder Flakes werden unter "Beschädigung" oder unter Umständen sogar "Zerstörung" orientiert, gebogen, gekrümmt oder dergleichen. Durch die Verwendung eines Extrudats auch bei der Herstellung des Flüssigeffektlacks bzw. die Einführung der entsprechenden Effektpigmentpartikel wird die Nachstellung des Pulvereffektlacks durch den Flüssigeffektlack möglich.

Die Erfindung umfaßt ebenfalls ein Verfahren zur Herstellung eines Flüssigeffektlacks, der mindestens ein Effektpigment, mindestens ein Bindemittel, mindestens ein Lösungsmittel und ggf. weitere für Flüssiglacke übliche Inhaltsstoffe enthält. Dieses Verfahren ist dadurch gekennzeichnet, daß mindestens ein Teil des Effektpigments zusammen mit mindestens einem Teil des Bindemittels in einer geeigneten Homogenisier-und/oder Dispergiervorrichtung, insbesondere einem Extruder, vermengt wird und mit Hilfe der auf diese Weise erhaltenen Mischung aus Effektpigment und Bindemittel der Flüssigeffektlack hergestellt wird. Dabei können übliche Homogenisieroder Dispergiervorrichtungen verwendet werden. Insbesondere werden übliche aus dem Pulverextrusionsverfahren zur Herstellung von Pulverlacken bekannte Extruder, bei denen es sich meist um Schneckenextruder handelt, eingesetzt. Die sich an den Mischungs-/Extrudierschritt anschließende Herstellung des Flüssigeffektlacks erfolgt grundsätzlich in bekannter Weise unter Einsatz bekannter Substanzen.

Das Mischen des Effektpigments und des Bindemittels im Extruder erfolgt üblicherweise unter vergleichbaren Bedingungen wie bei der Herstellung des Pulvereffektlacks, dem der Flüssigeffektlack nachgestellt sein soll. Vorzugsweise wird die gesamte Menge an Effektpigment und ein Teil des Bindemittels verwendet. Gegebenenfalls kann der Fachmann die Parameter des Extrudierschrittes in bekannter Weise verändern und durch Standardversuche feststellen, ob der letztendlich hergestellte Flüssigeffektlack in seinen gewünschten Eigenschaften dem entsprechenden Pulvereffektlack entspricht.

In Weiterbildung wird bei dem erfindungsgemäßen Verfahren zunächst aus dem Bindemittel und dem Effektpigment in einem üblichen Mischer eine Vormischung hergestellt, die dann in der entsprechenden Vorrichtung, insbesondere dem Extruder (intensiv) vermengt, insbesondere extrudiert, wird. Insbesondere wird die erhaltene Mischung bzw. das Extrudat, ggf. nach Abkühlung, zerkleinert, d.h. in üblicher Weise gebrochen und anschließend gemahlen.

In Weiterbildung wird die Mischung/das Extrudat anschließend mit einer sog. Bindemittellösung, d.h. einer Mischung aus einem weiteren Teil Bindemittel und einem Lösungsmittel gemischt. Auf diese Weise wird das Extrudat gelöst. Gegebenenfalls kann bei diesem Mischungs- bzw. Löseschritt zusätzlich zur Bindemittellösung weiteres Lösungsmittel zugegeben werden. Dieser Reaktionsschritt kann vorzugsweise in einem sog. Dissolver erfolgen wie sie aus dem Stand der Technik bekannt sind.

Bei bevorzugten Ausführungsformen wird der Flüssigeffektlack in der Weise komplettiert, daß das gelöste Extrudat, d.h. nach Zugabe von Bindemittellösung oder von Bindemittellösung und Lösungsmittel, mit einem weiteren Anteil Bindemittellösung und/oder einem weiteren Anteil Bindemittel und ggf. Additiven gemischt wird. Bei dem weiteren Anteil Bindemittel wird vorzugsweise ein anderes Bindemittel verwendet als in den vorherigen Verfahrensschritten. Bei den Additiven kann es sich, wie bereits ausgeführt, um übliche Additive für Flüssig- bzw. Flüssigeffektlacke handeln.

Bei weiteren Ausführungsformen wird dann erfindungsgemäß der Farbton des Flüssigeffektlacks in üblicher Weise durch Zugabe entsprechender Farbpigmente eingestellt und ggf. auch die Viskosität des Flüssiglacks durch Zugabe geeigneter organischer Lösungsmittel, durch Zugabe geeigneter Cosolventien für wässrige Lacke oder durch Zugabe von Wasser.

Weiter umfaßt die Erfindung eine bereits beschriebene Mischung aus Effektpigment und Bindemittel, die dadurch gekennzeichnet ist, daß sie durch Vermengen von Effektpigment und Bindemittel in einer geeigneten Homogenisier- und/oder Dispergiervorrichtung, insbesondere einem Extruder, hergestellt ist. Eine derartige Mischung enthält, im Vergleich zu anderen aus der Pulverlackherstellung bekannten Mischungen, keinen Härter oder weitere Inhaltsstoffe wie Additive, da diese bei der Weiterverarbeitung der Mischung zu einem Flüssigeffektlack stören würden. Bei einer derartigen erfindungsgemäflen Mischung sind die vorhandenen Effektpigmente jedoch in zur Herstellung von Pulverlacken vergleichbarer Weise bearbeitet, beschädigt oder sogar unter Umständen zerstört, so daß durch diese Mischung, insbesondere bezüglich des Flops, gleiche optische Eigenschaften wie bei einem Pulvereffektlack in einen Flüssigeffektlack einbringbar sind. Auf die obigen Ausführungen wird verwiesen und Bezug genommen. Dies gilt insbesondere auch für das Verfahren zur Herstellung der beanspruchten Mischung, das oben bereits als Verfahrensschritt beschrieben ist und als Verfahren zur Herstellung der Mischung/des Extrudats ebenfalls getrennt beansprucht werden soll.

Die beschriebenen Merkmale und weitere Merkmale der Erfindung ergeben sich aus der nachfolgenden Beschreibung von bevorzugten Ausführungsformen in Verbindung mit den Unteransprüchen und den Zeichnungen. Hierbei können die einzelnen Merkmale jeweils für sich oder zu mehreren in Kombination miteinander verwirklicht sein.

In den Zeichnungen zeigen:
- Fig. 1: Wiedergaben von fotografischen Schnittansichten
a. eines Pulvereffektlacks mit Aluminiumpigmenten
b. eines nach dem Stand der Technik hergestellten Flüssigreparaturlacks für den Pulvereffektlack gemäß a.
c. eines erfindungsgemäß hergestellten Flüssigreparaturlacks für den Pulvereffektlack gemäß a.
- Fig. 2: Vergleich der Ergebnisse reflexionsspektroskopischer Messungen für den Pulvereffektlack gemäß Fig. 1a. und den Flüssigreparaturlack gemäß Fig. 1b.
- Fig. 3: Vergleich der Ergebnisse reflexionsspektroskopischer Messungen für den Pulvereffektlack gemäß Fig. 1a. und den Flüssigreparaturlack gemäß Fig. 1c.

### Beispiel 1:

### Herstellung eines Pulvereffektlacks

Es wird ein Pulvereffektlack, der bezüglich seiner optischen Eigenschaften durch einen Flüssigeffektlack nachgestellt werden soll, durch ein übliches, dem Fachmann bekanntes Herstellungsverfahren bereitgestellt. Dabei wird zunächst in üblicher Weise eine Mischung aus Bindemittel (Harz), Härter, Effektpigment, ggf. Farbpigment und üblichen Additiven fertiggestellt. Im vorliegenden Fall wird als Bindemittel ein Acrylatharz vom Typ Almatex PD 7610 der Anderson Development Company eingesetzt. Als Effektpigment kommt ein Aluminiumpigment vom Typ EX 580 der Fa. Silberline Ltd., Schottland, zum Einsatz.

Die fertiggestellte Mischung wird in einen Extruder eindosiert und extrudiert. Hier kann beispielsweise das Modell ZSK 25 der Fa. Werner + Pfleiderer, Deutschland, zum Einsatz kommen. Beim Extrudierschritt erfolgt in der Schmelzphase die innige Vermischung der Komponenten des Pulverlacks. Nach Abkühlung wird das Extrudat in üblicher Weise gebrochen und anschließend vermahlen, beispielsweise in Sichtermühlen.

### Beispiel 2:

### Herstellung eines Flüssigreparaturlacks für den Pulvereffektlack gemäß Beispiel 1 nach dem Stand der Technik

Der Flüssigreparaturlack nach Stand der Technik wird wie folgt hergestellt:
1. 50 Gewichtsteile Aluminiumpigment (Typ EX 580 der Fa. Silberline Ltd., Schottland) werden mit 50 Gewichtsteilen Lösungsmittel (Butylacetat 98/100) angeteigt und anschließend 30 min unter einem Rührer mit zahnloser Scheibe bei 1000 U/min vermischt.
2. Unter Verwendung der Mischung gemäß Verfahrensschritt 1. wird der Flüssigeffektlack wie folgt fertiggestellt:
   2.1. Zunächst wird aus 80 Gewichtsteilen Lösungsmittel (3:1 Mischung aus Butylacetat 98/100 und Solvesso® 100) und 20 Gewichtsteilen Bindemittel (1:1 Mischung aus einem mit Celluloseacetobutyrat verträglichen Acrylatharz und Celluloseacetobutyrat) in üblicher Weise ein sog. Stammlack hergestellt.
   2.2. 10 Gewichtsteile der im Verfahrensschritt 1. erhaltenen angeteigten Mischung werden danach mit 90 Gewichtsteilen Stammlack versetzt und die daraus erhaltene Mischung weitere 20 min gerührt. Anschließend werden noch weitere für Flüssiglacke bekannte Additive zur Verbesserung von Verlauf, Entlüftung usw. in üblichen Mengen zugegeben und eingerührt.
   2.3. Nach dem Komplettieren des Flüssigeffektlacks im Verfahrensschritt 2.2. wird der exakte Farbton nach dem Stand der Technik mit Tönpasten auf Basis von Celluloseacetobutyrat eingestellt.
   2.4. Schließlich erfolgt noch eine Viskositätseinstellung nach dem Stand der Technik mit den betreffenden organischen Lösungsmitteln.

### Beispiel 3:

### Herstellung eines Flüssigreparaturlacks für den Pulvereffektlack gemäß Biespiel 1 nach der Erfindung

Der erfindungsgemäße Flüssigeffektlack wird wie folgt hergestellt:
1. 90 Gewichtsteile Acrylatharz (Typ Almatex PD 7610 der Anderson Development Company) und 10 Gewichtsteile Aluminiumpigment (Typ EX 580 der Fa. Silberline Ltd., Schottland) werden in einem konventionellen Mischer zu einem Vormischgut vermischt. Dieses wird gleichmäßig in einen Extruder eindosiert und extrudiert. Bei dem Extruder handelt es sich um ein Modell ZSK 25 der Fa. Werner + Pfleiderer, Deutschland, wobei eine Temperatureinstellung von 40 °C/l00 °C/100 °C/100 °C und eine Drehzahl von 300 U/min gewählt wurde. Das im Extrudierschritt erhaltene Extrudat wird mit einem Walzenkühler abgekühlt und anschließend in üblicher Weise gebrochen.
2. Mit Hilfe des erfindungsgemäßen Extrudats wird ein erfindungsgemäßer Flüssigeffektlack in den folgenden Verfahrensschritten hergestellt:
   2.1. Zunächst wird eine Bindemittellösung aus 50 Gewichtsteilen Lösungsmittel (Butylacetat 98/100) und 50 Gewichtsteilen Acrylatharz (Almatex PD 7610) auf übliche Weise hergestellt.
   2.2. Dann werden 25 Gewichtsteile der gemäß Verfahrensschritt 2.1. erhaltenen Bindemittellösung, 25 Gewichtsteile Lösungsmittel (Butylacetat 98/100) und 50 Gewichtsteile des gemäß Verfahrensschritt 1. erhaltenen Extrudats vermischt. Dabei wird so vorgegangen, daß das Lösemittel und die Bindemittellösung vorgegeben und das Extrudat unter einem konventionellen Dissolver zugegeben wird. Die Lösezeit beträgt ca. 3 bis 4 Stunden, wobei eine Zackenscheibe verwendet und eine Drehzahl von 1500 U/min gewählt wurde.
   2.3 Der Flüssigeffektlack wird dadurch komplettiert, daß 45 Gewichtsteile der gemäß Verfahrensschritt 2.2. erhaltenen Mischung vorgelegt und dann unter Rühren zunächst 25 Gewichtsteile der Bindemittellösung gemäß Verfahrensschritt 2.1. und 30 Gewichtsteile eines konventionellen Acrylatharzes (Typ Synthacryl SC 370 der Fa. Hoechst, Deutschland; 75%-ig in Solvesso® 100) zugegeben werden. Anschließend werden noch übliche für Flüssiglacke bekannte Additive zur Verbesserung von Verlauf, Entlüftung usw. in üblichen Mengen eingerührt.
   2.4. Nach Komplettieren des Flüssigeffektlacks wird der exakte Farbton nach dem Stand der Technik mit einer Tönpaste auf Basis von Celluloseacetobutyrat (z.B. GAB 381-Typen von Eastman Kodak) eingestellt.
   2.5. Schließlich erfolgt noch eine Viskositätseinstellung nach dem Stand der Technik mit den betreffenden organischen Lösungsmitteln.

### Untersuchungen

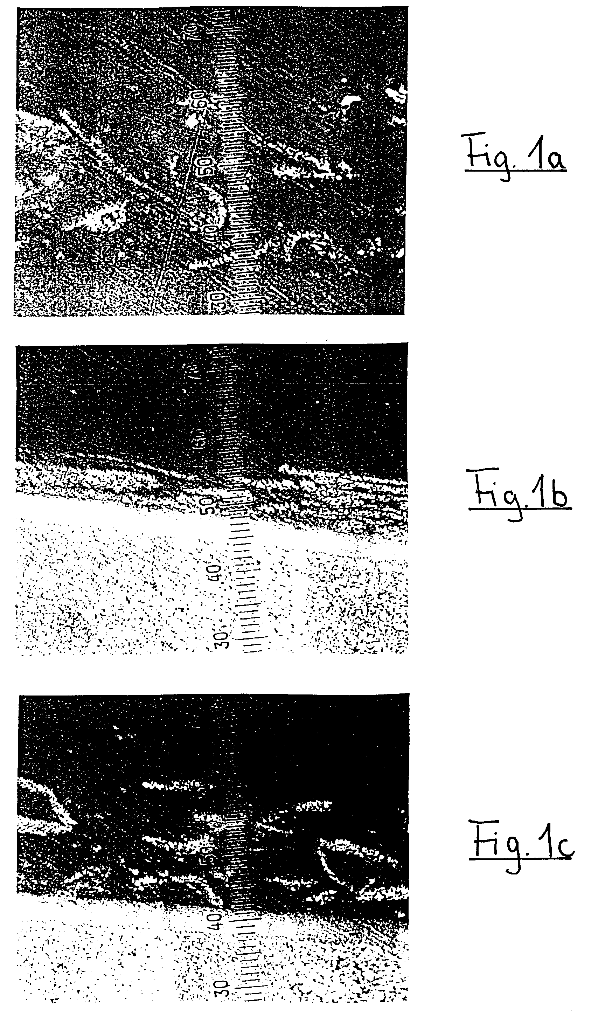

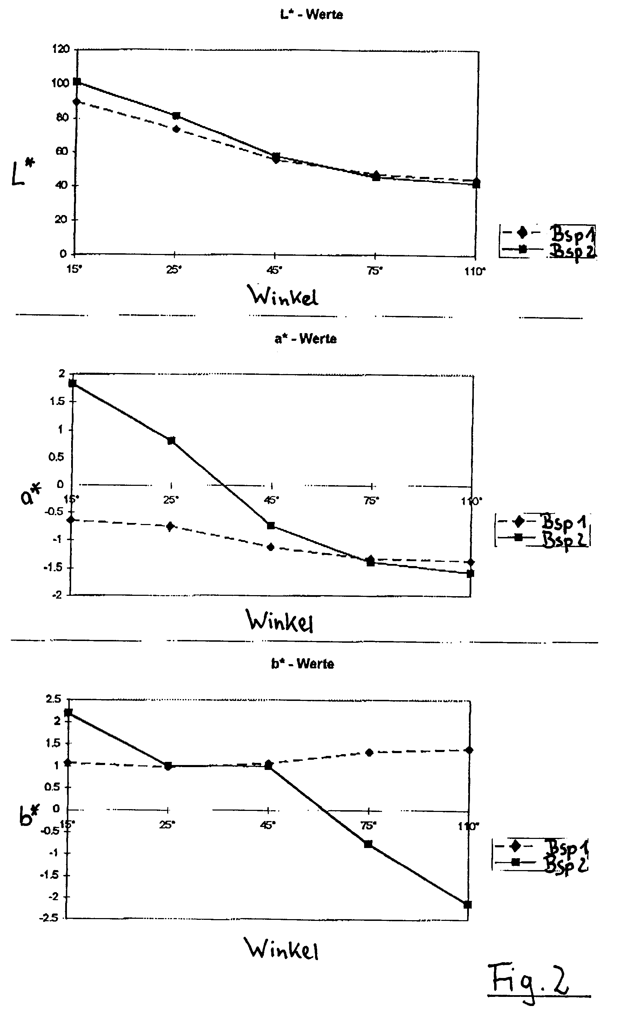

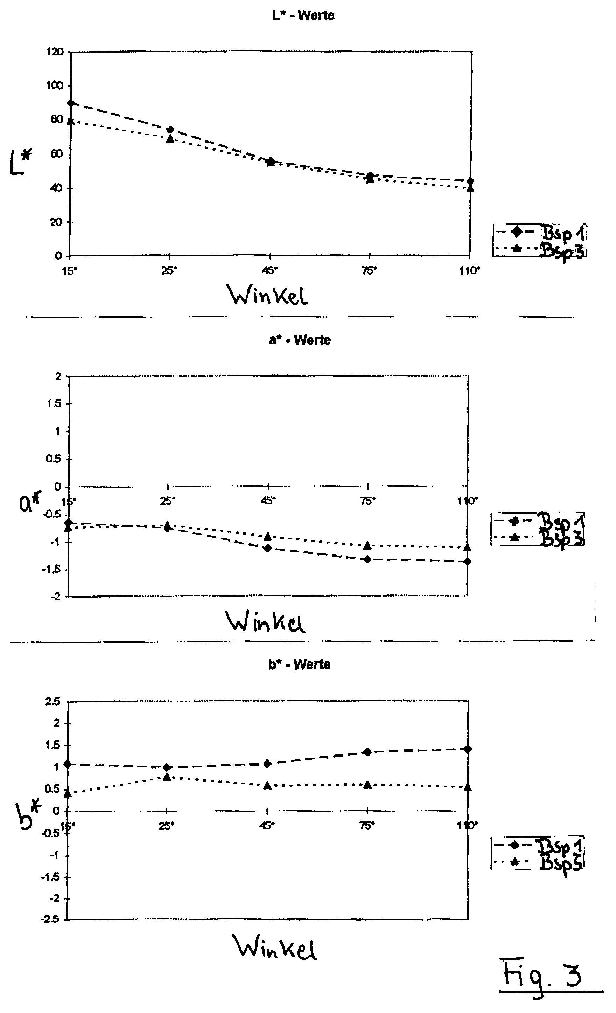

1. Die nach den Beispielen 1 bis 3 erhaltenen Lacke werden in üblicher Weise auf einen Untergrund aufgebracht und anschließend in ebenfalls üblicher Weise fotografische Schnittansichten gefertigt. Diese sind in den Fig. 1a., b. und c. wiedergegeben.
   Fig. 1a. zeigt die Schnittansicht des Pulvereffektlacks gemaß Beispiel 1. Hier sind deutlich die teilweise gebogenen und beschädigten Aluminiumpigmente (flakes) in Form von deformierten Plättchen oder Schuppen zu erkennen.
   Ein Vergleich von Fig. 1a. mit Fig. 1b. zeigt deutlich, daß die Pigmente gemäß Fig. 1b. nicht nur innerhalb der Lackschicht regelmäßig angeordnet sind, sondern daß es sich bei den Pigmenten gemäß Fig. 1b. um im wesentlichen unbeschädigte Plättchen oder Schuppen handelt. Es ist somit ohne weiteres erklärbar, warum die Lacksysteme gemäß Fig. 1a. und Fig. 1b. unterschiedliche optische Effekte zeigen. Damit wird ein Lacksystem gemäß Fig. 1b. keine befriedigenden Ergebnisse beim Einsatz als Flüssigreparaturlack für den Pulvereffektlack gemäß Fig. 1a. liefern.
   Demgegenüber zeigt ein Vergleich der Fig. 1a. und 1c., daß bei dem Lacksystem gemäß Fig. 1c. nicht nur ebenfalls eine Verteilung der Aluminiumpigmente wie bei Fig. 1a. erreicht wird, sondern daß es sich hier ebenfalls um unregelmäßig geformte und gebogene Plättchen oder Schuppen handelt. Damit wird durch die Simulation des Herstellungsprozesses des Pulvereffektlacks bei der Herstellung des Flüssigeffektlacks das gewünschte Ergebnis erreicht, nämlich daß die Lacksysteme gemäß Fig. 1a. und Fig. 1c. bezüglich ihrer optischen Eigenschaften in ausreichendem Maße gleichwertig sind. Deshalb ist das Lacksystem gemäß Fig. 1c. als Flüssigreparaturlack für das Pulvereffektlacksystem gemäß Fig. 1a. geeignet.
2. Die nach den Beispielen 1 bis 3 hergestellten Lacke werden nach einem üblichen reflexionsspektroskopischen Verfahren untersucht. Dabei werden in bekannter Weise aus den Meßergebnissen die L*-Werte, die a*-Werte und die b*-Werte bestimmt. Die Reflektionsmessungen werden jeweils bei 15°, 25°, 45°, 75° und 110° durchgeführt. Es wird ein Mehrfachwinkel-Spektrophotometer (Multi-Angle Spectrophotometer) der Fa. X-Rite, USA, vom Typ MA 68 verwendet (45° Beleuchtung; 15°, 25°, 45°, 75°, 110° Beobachtung (Off-Specular)). Dieses Gerät ist speziell für die Untersuchung von Effektlacken vorgesehen. Ein Vergleich der L*-, a*-, b*-Werte des Pulvereffektlacks gemäß Beispiel 1 (Symbol◆) mit den Flüssigeffektlacken gemäß Beispiel 2 (Symbol ■)und Beispiel 3 (Symbol▲) ist in den Fig. 2 bzw. 3 dargestellt.
   Die Bewertung der Fig. 2 und 3 ist dabei auf die Tatsache abgestellt, daß zum einen gleiche Werte bei den untersuchten Winkeln und zum anderen ein gleicher Verlauf der durch die verschiedenen Meßwerte gelegten Kurve ein Maß für die Übereinstimmung der Lacksysteme sind.
   Im Ergebnis zeigt Fig. 3 im Vergleich zu Fig. 2, daß der Flüssigeffektlack nach der Erfindung dem Pulvereffektlack in seinen optischen Eigenschaften wesentlich näher kommt als der Flüssigeffektlack nach Stand der Technik. So sind zwar die L*-Werte bei beiden Lacksystemen noch vergleichbar, beim erfindungsgemäßen Flüssiglack ist jedoch der Kurvenverlauf der L*-Werte insgesamt besser an den Pulvereffektlack angepaßt. Beim Flüssigeffektlack nach Stand der Technik kreuzt die L*-Kurve die Kurve des Pulvereffektlacks.
   Noch deutlicher zeigen sich die verbesserten Eigenschaften des erfindungsgemäßen Lacks bei den a*- und b*-Werten. Hier liegen nicht nur die Werte selbst beim erfindungsgemäßen Lack insgesamt näher bei den Werten des Pulvereffektlacks, auch der Kurvenverlauf ist beim erfindungsgemäßen Lack deutlich besser.
   Damit bestätigen auch die spektrophotometrischen Messungen, daß der erfindungsgemäße Flüssigeffektlack dem Pulvereffektlack wesentlich näher kommt als ein konventioneller Flüssigeffektlack und damit erstmals eine befriedigende Nachstellung eines solchen Pulvereffektlacks gelingt.

## Patentansprüche

1. Flüssigeffektlack, umfassend mindestens ein Glanz- oder Effektpigment, mindestens ein Bindemittel, mindestens ein flüssiges Lösungsmittel und ggf. weitere für Flüssiglacke übliche Inhaltsstoffe wie Farbpigmente, Füllstoffe und Additive, dadurch gekennzeichnet, daß der Flüssigeffektlack unter Verwendung einer homogenisierten und/oder dispergierten Mischung, die mindestens einen Teil des Bindemittels und mindestens einen Teil des Glanz- bzw. Effektpigments enthält, insbesondere unter Verwendung eines Extrudats aus Bindemittel und Glanz- bzw. Effektpigment, hergestellt ist.

2. Flüssigeffektlack nach Anspruch 1, dadurch gekennzeichnet, daß es sich bei dem Glanz-/Effektpigment um ein sog. Metalleffektpigment handelt, wobei vorzugsweise das Metalleffektpigment aus Aluminiumblättchen oder Aluminiumschuppen gebildet ist.

3. Flüssigeffektlack nach Anspruch 1, dadurch gekennzeichnet, daß es sich bei dem Glanz-/Effektpigment um ein sog. Perlglanzpigment handelt.

4. Flüssigeffektlack nach einem der vorhergehenden Ansprüche, dadurch gekennzeichnet, daß das Bindemittel ein extrudierbares Harz, vorzugsweise ein extrudierbares Kunstharz ist.

5. Flüssigeffektlack nach einem der vorhergehenden Ansprüche, dadurch gekennzeichnet, daß das Bindemittel ein Epoxidharz, ein Polyesterharz oder vorzugsweise ein Acrylatharz ist.

6. Flüssigeffektlack nach einem der vorhergehenden Ansprüche, dadurch gekennzeichnet, daß es sich bei dem Flüssigeffektlack um einen Reparaturlack für einen Pulvereffektlack handelt.

7. Flüssigeffektlack gemäß dem Oberbegriff von Anspruch 1, insbesondere nach einem der vorhergehenden Ansprüche, dadurch gekennzeichnet, daß die vorhandenen Glanzpigment- oder Effektpigmentpartikel derart ausgebildet sind, daß der Flüssigeffektlack gleiche oder weitgehend gleiche optische Eigenschaften aufweist wie ein diese Glanzpigment- oder Effektpigmentpartikel enthaltender Pulvereffektlack.

8. Flüssigeffektlack nach Anspruch 7, dadurch gekennzeichnet, daß die Glanzpigment- oder Effektpigmentpartikel gleiche oder weitgehend gleiche Abmessungen und/oder gleiche oder weitgehend gleiche Gestalt besitzen wie die Glanzpigment- oder Effektpigmentpartikel eines Pulvereffektlacks mit gleichen oder weitgehend gleichen optischen Eigenschaften.

9. Verfahren zur Herstellung eines Flüssigeffektlacks, der mindestens ein Glanz- oder Effektpigment, mindestens ein Bindemittel, mindestens ein flüssiges Lösungsmittel und ggf. weitere für Flüssiglacke übliche Inhaltsstoffe wie Farbpigmente, Füllstoffe und Additive umfaßt, dadurch gekennzeichnet, daß mindestens ein Teil des Glanzpigments oder Effektpigments zusammen mit mindestens einem Teil des Bindemittels in einer Homogenisier- und/oder Dispergiervorrichtung, insbesondere einem Extruder vermengt und mit Hilfe der so erhaltenen Mischung aus Glanzpigment/Effektpigment und Bindemittel der Flüssigeffektlack hergestellt wird.

10. Verfahren nach Anspruch 9, dadurch gekennzeichnet, daß die gesamte Menge an Glanzpigment/Effektpigment mit Bindemittel vermengt wird.

11. Verfahren nach Anspruch 9 oder Anspruch 10, dadurch gekennzeichnet, daß Glanzpigment/Effektpigment und Bindemittel zunächst vorgemischt werden und diese Vormischung dann in einer Homogenisier- und/oder Dispergiervorrichtung, insbesondere einem Extruder, vermengt wird.

12. Verfahren nach einem der Ansprüche 9 bis 11, dadurch gekennzeichnet, daß die Mischung aus Glanzpigment/Effektpigment und Bindemittel mit einer aus Bindemittel und Lösungsmittel hergestellten Bindemittellösung, vorzugsweise unter Zugabe von weiterem Lösungsmittel, vermischt wird, wobei vorzugsweise aus der so erhaltenen Mischung, weiterer Bindemittellösung, weiterem Bindemittel und ggf. Additiven ein Flüssigeffektlack komplettiert wird.

13. Verfahren nach Anspruch 12, dadurch gekennzeichnet, daß der Farbton des Flüssigeffektlacks mit Hilfe von Farbpigmenten, vorzugsweise mit Hilfe von Tönpasten auf Basis von Celluloseacetobutyrat eingestellt wird.

14. Verfahren nach Anspruch 12 oder Anspruch 13, dadurch gekennzeichnet, daß die Viskosität des Flüssigeffektlacks mit Hilfe von Lösungsmitteln eingestellt wird.

15. Mischung aus mindestens einem Glanz- oder Effektpigment und mindestens einem Bindemittel, dadurch gekennzeichnet, daß sie durch Vermengen von Glanzpigment/Effektpigment zusammen mit Bindemittel in einer Homogenisier-und/oder Dispergiervorrichtung, insbesondere einem Extruder, hergestellt ist, wobei vorzugsweise die Mischung in Form eines Extrudats, insbesondere eines gebrochenen und/oder gemahlenen Extrudats, vorliegt.
